# EUROPEAN PATENT APPLICATION

(11) **EP 1 431 206 A1**
(43) Date of publication of application: **23.06.2004**
(21) Application number: 02768072.7
(22) Date of filing: 25.09.2002
(51) Int. Cl.: B65D 65/40, B65D 81/30, B32B 27/10, G01N 21/84

(54) **PAPER PACKAGING MATERIAL FOR LIQUID FOOD AND METHOD FOR PRODUCTION THEREOF**

(30) Priority: 27.09.2001 JP 2001296330; 27.09.2001 JP 2001296334
(71) Applicant: Tetra Laval Holdings & Finance S.A., 1009 Pully (CH)
(72) Inventor: FRISK, Peter, c/o NIHON TETRA PAK K.K., Tokyo 102-8544 (JP); ONO, Kazuya, c/o NIHON TETRA PAK K.K., Tokyo 102-8544 (JP); OGITA, Hiroaki, c/o NIHON TETRA PAK K.K., Tokyo 102-8544 (JP)
(74) Representative: Müller, Frank Peter, Dipl.-Ing.
(86) International application number: PCT/JP2002/009890
(87) International publication number: WO 2003/029099

(57) **Abstract**

In manufacture of the paper container from the packaging materials, the damage of internal layer of packaging materials is promptly inspected, and degradation by light exposure of content can be prevented.

Method of manufacturing light barrier paper packaging materials for liquid food formed from a laminate having a paper layer, a thermoplastic resin outside layer and a thermoplastic resin inside layer comprising
a step of preparing substantially complete bleached white bleached paper layer of weight of 50-350g /m²,
a step of providing light barrier layer of light barrier material in the inside of the bleach paper layer before or during the lamination of the inside thermoplastic resin layer,
a step of inspecting defect of the obtained laminate by observation of the visible or invisible inside-surface of the bleach layer from the inside thermoplastic resin layer side of the obtained laminate through the light barrier layer.

## Description

### TECHNICAL FIELD

The invention relates to paper packaging materials for liquid food having excellent light barrier ability and the method of manufacturing.

The invention relates to especially a method of manufacturing paper packaging materials for liquid food promptly finding damages of the inside layers of paper layer as a core layer having excellent light barrier ability.

### BACKGROUND ART

Paper containers comprising of a laminated material of paper and thermoplastic resin are widespread as a container of liquid food such as juice, coffee, milk, and liquor.

As for the paper container, the outermost layer (layer contacting to an outside air) and an innermost layer (layer contacting to liquid food) usually consist of thermoplastic resin layer. However, the paper container is poor light barrier.

Contents of milk and so on are deteriorated due to visible light.

In the contents that are sensitive to ultraviolet light, an aroma is decreased by transmitted ultraviolet light.

In order to make the paper container have light barrier, laminating aluminum foil or surface-coating carbon black are not practical in viewpoint of cast-problem and environment.

While filling up liquid food in a paper container and manufacturing packaging materials for the paper container, internal layer of the packaging materials might have small damages like pinhole.

With the pinhole, liquid food of contents leaks out and reaches to the paper layer. The contents cannot be protected.

Conventionally, a method of using coloring ink forcefully is employed to inspect the damage of the internal layer. However, the test method is complicated, and need much time.

### DISCLOSURE OF THE INVENTION

The purpose of this invention is to provide with a packaging materials for liquid food and a manufacturing method of packaging materials for liquid food having excellent light-barrier promptly judging the damage of internal layer of the paper container packaging materials while manufacturing a paper container from packaging materials and, preventing deterioration of contents by light irradiation

Using the packaging materials which do not transmit light in range of 200-600nm or the packaging materials with almost no transmission is suitable to improve the quality of the packaging materials for liquid food.

Method of this invention of manufacturing paper packaging materials for liquid food formed from a laminate having a paper layer, a thermoplastic resin outside layer and a thermoplastic resin inside layer characterized by comprising
a step of preparing substantially complete bleached white bleach paper layer of weight of 50-350g /m²,
a step of providing a light barrier layer of light barrier material in the inside of the bleach paper layer before or during the lamination of the inside thermoplastic resin layer,
a step of inspecting defect of the obtained laminate by observation of the visible or invisible inside-surface of the bleach layer from the inside thermoplastic resin layer side of the obtained laminate through the light barrier layer,

In preferable embodiment of the manufacturing method of this invention, thermoplastic resin layer of the inside of bleach paper layer contains blue pigment, yellow pigment and white pigment.

In preferable embodiment of the manufacturing method of this invention, the thermoplastic resin layer containing the pigment consist of three kinds of thermoplastic resin layer containing different pigment from each other.

In preierable embodiment of the manufacturing method of this invention, the thermoplastic resin layer containing the pigment consist of a thermoplastic resin layer containing one kind of the above pigments and thermoplastic resin layer containing the others of the pigments.

In preferable embodiment of the manufacturing method of this invention, the thermoplastic resin layer of the outside of bleach paper layer further contains white pigment.

In preferable embodiment of the manufacturing method of this invention, a dark color pigment containing layer is provided in the inside of the bleach paper layer, and transparency thermoplastic resin inner layer is provided in the inside of the dark color pigment containing layer.

In preferable embodiment of the manufacturing method of this invention, the dark color pigment-containing layer contacts with the bleach paper layer directly.

The paper packaging materials for liquid food of this invention formed from laminated material having a paper layer, an outside thermoplastic resin layer and an inside thermoplastic resin layer characterized by that
the paper layer is substantially complete bleached white bleach paper layer with weight of 50-350g /m² and the thermoplastic resin layer of the inside of the paper layer contains blue pigment, yellow pigment and white pigment,

In preferable embodiment of the liquid food paper packaging materials of this invention, the thermoplastic resin layer containing pigment consist of three kinds of thermoplastic resin layers that contain different pigment each other.

In preferable embodiment of the liquid food paper packaging materials of this invention, the thermoplastic resin layers containing the pigments consist of the thermoplastic resin layer containing one kind of the pigment and the thermoplastic resin layers containing the others of the pigments.

In preferable embodiment of liquid food paper packaging materials of this invention, the thermoplastic resin layer of the outside of the bleach paper layer further contains white pigment.

Another paper packaging materials for liquid food of this invention formed from a laminated material having a paper layer, and an outside thermoplastic resin layer and an inside thermoplastic resin layer characterized by that
the paper layer is substantially complete bleached white bleach paper layer with weight of 50-350g /m², a dark color pigment containing layer is provided in the inside of the paper layer and a transparent thermoplastic resin inner layer is provided in the inside of the dark color pigment containing layer.

In preferable embodiment of liquid food paper packaging materials of this invention, the dark color pigment-containing layer directly contacts with the bleach paper layer.

### Best Mode for Carrying out the Invention

White paper completely bleached substantially with chlorine, ozone and, ammonia is used for paper layer constituting the packaging materials of this invention. The paper has weight of 50-350g /m².

The thermoplastic resin of one layer of packaging materials of this invention includes polyolefin, polyamide, polyester, polyvinylchloride, polystyrene, methacrylic resin, ethylene- α -unsaturated carboxylic acid copoiymer, ionomer, unsaturated carboxylic acid modified polyolefin, cyclic olefin copolymer, ethylene-vinyl alcohol copolymer, polyvinyl alcohol having saponification degree of over 95% and, acetyl cellulose.

The polyolefin includes polyethylene, polypropylene, ethylene-propylene copolymer and, polybutene -1. The polyamide includes polyamide 6, polyamide 6-6, polyamide 11 and polyamide 12. The polyester includes polyethylene terephthalate and, polybutylene terephthalate. Polyolefin is more preferable.

The polyethylene includes high-density polyethylene, middle density polyethylene, low-density polyethylene, linear low-density polyethylene and linear low-density polyethylene (mLLDPE) produced by using metallocene catalyst. The above polyethylene is preferable.

In addition, mLLDPE can be manufactured by copolymerizing ethylene and α - olefin comonomer having 4-8 carbons under metallocene catalyst.

Thermoplastic resin layer includes over 2 layers as well as one layer. Thickness of the thermoplastic resin layer is usually 5-200 µm.

In one embodiment of this invention, the packaging materials comprises the thermoplastic resin layer containing blue pigment, yellow pigment and white pigment, and being provided to the inside of the paper layer.

The pigment can be used separately, by being mixed and by being mixed in the multilayered structure.

The example of the packaging materials of this invention comprising the laminated material combined with the paper layer and the thermoplastic resin layer containing the pigment includes thermoplastic resin layer / paper layer / blue pigment containing thermoplastic resin layer / yellow pigment containing thermoplastic resin layer / white pigment containing thermoplastic resin layer; thermoplastic resin layer /paper layer / thermoplastic resin layer / thermoplastic resin layer containing blue pigment, yellow pigment and white pigment / thermoplastic resin layer; thermoplastic resin layer / paper layer / thermoplastic resin layer /thermoplastic resin layer containing blue pigment and yellow pigment/ white pigment containing thermoplastic resin layer.

In addition, the thermoplastic resin layer which contained white pigment can be arranged outward of the above packaging materials.

For example, the packaging materials includes white pigment containing thermoplastic resin layer / paper layer / blue pigment and yellow pigment containing thermoplastic resin layer / white pigment containing thermoplastic resin layer. In addition, in above example, in the left side end shows, an outermost layer and, the right-side end shows an innermost layer.

For the typical example of above pigment, for blue pigment, permanent blue, phthalocyanine pigment, cyanine pigment, for yellow pigment, cobalt yellow, azo pigment, yellow iron oxide and, for white pigment, titanium white (titanium dioxide), zinc oxide are included.

In the packaging materials of this invention for liquid food, the above-mentioned pigment is safe in food hygiene.

The above pigment is used in powder type, and the particle size in average is approx. 0.2-5 usual µm.

In addition, a content of the pigment in colored thermoplastic resin layer is 0.5-30 usually weight %.

The above blue pigment can reflect visible light of 550-600nm wave length, above yellow pigment can reflect the visible ray of 400-550nm, above white pigment can reflect less than 400nm wave length, particularly the visible ray of 200-400nm and less.

The light of wide range of 200-600nm cannot be penetrated by combination of blue pigment, yellow pigment and white pigment.

In another embodiment according to this invention, the packaging materials contain dark color pigment containing layer provided to the inside of the paper layer. The dark color pigment includes blue pigment, black pigment, body gray pigment, dark green pigment, dark brown pigment and, body red pigment.

The pigments can be used by mixing more than two kinds, as well as by choosing one kind of pigment.

Packaging materials of this invention are for liquid food, and it is safe in food hygiene.

Dark color pigment containing layer is arranged in the inside of above paper layer. Dark color pigment containing layer is desirably arranged so as to contact with the paper layer, particularly.

The method of preparing the dark color pigment containing layer includes, for example, a method of extruding mixture with the resin and dark color pigment, a method of coating a lacquer containing dark color pigment to the inside of paper layer and, a method of printing the dark color pigment in the inside of paper layer.

The resin to mix with dark color pigment includes preferable above-mentioned thermoplastic resin, particularly polyolefin.

A content of the pigment in the lacquer containing dark color pigment and mixture with the resin and the dark color pigment is usually 0.5-30 wt%.

When dark color pigment containing layer is not arranged next to the paper layer, the layer formed between dark color pigment containing layer and paper layer is transparent layer.

The preferable transparent layer includes the following transparent resin layer.

Thickness of the dark color pigment-containing layer is 2-50 usual µm.

The resin of transparent resin layer includes preferably thermoplastic resin, e.g. polyolefin, polyester, polyvinylchloride, polystyrene, methacrylic resin, ionomer, ethylene-vinyl alcohol copolymer, acetyl cellulose. Polyolefin is particularly preferable.

Transparent resin layer contains one layer or more than two layers.

The transparent resin layer is desirably arranged so as to contact with the dark color pigment containing layer, particularly.

The innermost layer of the packaging materials of this invention can be formed by the following transparent resin layer, desirable polyethylene.

Thickness of transparent resin layer is 5-200 usual µm.

The thermoplastic resin arranged outward of above paper layer is desirably polyolefin. Polyethylene is particularly preferable.

The polyethylene includes high-density polyethylene, middle density polyethylene, low-density polyethylene, linear low-density polyethylene and, mLLDPE, particularly desirable middle density polyethylene and high-density polyethylene.

In addition, the innermost layer of packaging materials of this invention includes preferably polyethylene, and particularly desirable linear low-density polyethylene and mLLDPE.

Thickness of the thermoplastic resin layer with or without pigment is usually 5-200 µm.

The packaging materials of this invention comprise a laminated material of the paper layer and the thermoplastic resin layer. In addition to the layers, the laminated material laminated by for example, barrier film layer, an adhesive layer may be formed.

The barrier layer includes a solo layer of the barrier material and the multilayered layers including a barrier material.

The barrier material includes aluminum foil, silicon oxide vapor deposition polyethylene phthalate, ethylene - vinyl alcohol copolymer and nylon resin.

The multilayered layers including a barrier material includes polyethylene film / aluminum foil, adhesive polyethylene / biaxial stretching film of silicon oxide vapor deposition polyethylene terephthalate (/ adhesive), polyethylene film / adhesive / ethylene-vinyl alcohol copolymer film / adhesive, nylon resin film / adhesive.

Thickness of barrier layer is usually 5-25 µm.

The adhesive layer includes, for example, acrylic resin system adhesive, modified polyolefin system adhesive, ethylene-vinyl acetate copolymer, polyamide system adhesive and, epoxide resin adhesive.

The acrylic resin adhesive includes polymer and copolymer of acrylic acid, methacrylic acid and alkyl ester thereof.

The modified polyolefin adhesive includes polyethylene, polypropylene grafted by unsaturated carboxylic acid or the anhydride of acrylic acid, methacrylic acid, maleic acid, maleic anhydride, fumaric acid, itaconic acid under organic peroxide.

Thickness of the adhesive layer is usually 5-30 µm.

The packaging material of this invention comprises the laminated material of the above-mentioned layers.

In the manufacture method of packaging materials of this invention, the method of laminating layers thereof includes a method of laminating layers by using the adhesive, a method of heat-fusing thermofusion-possible layers, a method of simultaneously extruding thermofusion layers and a method of the combination thereof and, conventional methods.

The shape of a container formed by packaging materials of this invention includes well-known shapes and optional shapes, e.g. pouch type, a gable-top shape of carton for milk, cube, cylinder type and, brick type.

### Example

This invention is described by the following Example in detail.

### (Example 1-1)

Low density polyethylene (LDPE) having density of 0.924g/cm³ films (20 thickness µm) (outermost layer) / bleach paper (weight 300g/m²) / 5 wt% blue pigment (cyanine pigment) containing LDPE film (15 µm thickness) / 5 wt% yellow pigment (yellow iron oxide) containing LDPE film (15 µm thickness) / 5 wt% white pigment (titanium dioxide) containing linear low density polyethylene (LLDPE) in density of 0.910g/cm³ film (15 µ m thickness) (innermost layer) was manufactured as a laminated material.

In evaluation of light barrier performance of a laminate obtained by the above Example, by using a spectrum UV meter, transmittance was measured in the wavelength range of 200-600nm.

The result of the transmittancy was less than 5%.

### (Example 1-2)

Laminated material of LDPE film (outermost layer) used with Example 1/ bleach paper used with Example 1-1/ LDPE film (15µm thickness) of Example 1-1/ LDPE film (30 µm thickness) of Example 1 containing 5 wt% white pigment, 5 wt% yellow pigment and 5 wt% blue pigment/ a film comprising of mLLDPE having density of 0.908g/cm³, MFI: 16g/10 min., SR 1.5, 98 degrees C of maximum melting temperature by differential thermal analysis (15 µm) (innermost layer) was manufactured.

The result of a transmittancy of the laminate manufactured by the above Example with the evaluation as Example 1-1 was less than 5%.

### (Example 1-3)

Laminated material of LDPE film (outermost layer) used with Example 1/ bleach paper used with Example 1-1/ LDPE film (15µm thickness) of Example 1-1/ LDPE film (30 µm thickness) of Example 1 containing 5 wt% yellow pigment and 5 wt% blue pigment/ a film comprising of LLDPE (used with Example 1-1) containing 5 wt% white pigment (innermost layer) was manufactured.

The result of a transmittancy of the laminate manufactured by the above Example with the evaluation as Example 1-1 was less than 5%.

### (Example 1-4)

Laminated material of film comprising of LLDPE (used with Example 1-1) containing 5 wt% white pigment (outermost layer)/ bleach paper used with Example 1-1/ LDPE film (30 µm thickness) of Example 1 containing 5 wt% yellow pigment and 5 wt% blue pigment/ film comprising of LLDPE (used with Example 1-1) containing 5 wt% white pigment (innermost layer) was manufactured.

The result of a transmittancy of a laminate manufactured by the above Example with the evaluation as Example 1-1 was less than 5%.

### (Comparison example 1-1)

The laminated material comprising LDPE film (outermost layer) used with Example 1-1 / bleach paper used with Example 1-1/ LLDPE film (innermost layer) used with Example 1-1 was manufactured.

The result of transmittancy of the laminate manufactured by the above Example with the evaluation as Example 1-1 was more than 70%.

### (Comparison example 1-2)

The laminated material was manufactured as Example 1-1, except not using the LDPE film containing blue pigment.

The result of transmittancy of the laminate manufactured with the evaluation as Example 1-1 was more than 70%.

### (Comparison example 1-3)

The laminated material was manufactured, as Example 1-1 except not using the LDPE film containing yellow pigment.

The result of transmittancy of the laminate manufactured with the evaluation as Example 1-1 was more than 70%.

### (Comparison example 1-4)

The laminated material was manufactured as Example 1-1 except not using the LDPE film containing white pigment.

The result of transmittancy of the laminate manufactured as Example 1-1 was more than 70%.

From result of the Examples and Comparison examples, the packaging materials of Example 1-1, 1-2, 1-3, 1-4 comprising of laminated material having polyolefin layer containing blue pigment, yellow pigment and white pigment reflected the light of wave length 200-600nm.

On the other hand, the packaging materials of Comparison example 1-2, 1-3, 1-4 comprising of laminated material having the polyolefin layer not containing any blue pigment, yellow pigment and white pigment and the packaging materials of Comparison example 1-1 comprising of laminated material having the polyolefin layer not containing blue pigment, yellow pigment and white pigment do not reflect the light of wave length 200-600nm

### (Example 2-1)

A laminated material of LDPE film (20 µ m thickness) 0.924g/cm³ density (outermost layer)/ bleach paper (weight 300g/m²) / extruded LDPE (0.910g/cm³ density) film (15 µm thickness) containing black pigment (30 wt % master batch of carbon black)/ LLDPE film (20 µm thickness) (an innermost layer) was manufactured.

### (Example 2-2)

Except using the master batch of 25 wt % blue pigment (cyanine pigment), instead of the master batch of black pigment, laminated material of LDPE film (20 µ m thickness) (an outermost layer) / bleach paper / LDPE film (20 µm thickness) containing blue pigment / LLDPE film (20 µm thickness) (innermost layer) was manufactured as Example 2-1.

### (Example 2-3)

A laminated material of LDPE film (20 µm thickness) used with Example 1 (an outermost layer)/ bleach paper used with Example 1 /coated lacquer layer (20 µm thickness) containing black pigment (3 wt % carbon black)/ mLLDPE film (20 µm thickness) (innermost layer) having 98 degrees C by maximum melting temperature by differential thermal analysis, MFI: 1, 16g /10 minute, SR1.5, 0.908g/cm3 density was manufactured with the extrusion method.

### (Example 2-4)

Except using the lacquer of 25 wt % blue pigment (cyanine pigment), instead of the lacquer of black pigment, laminated material of LDPE film (20 µm thickness) (outermost layer) / bleach paper / lacquer layer (20 µm thickness) containing blue pigment/ mLLDPE film (20 µm thickness) (innermost layer) was manufactured as Example 3.

### (Comparison example 2-1)

The laminated material of LDPE film (an outermost layer) / bleach paper /LDPE film /LLDPE film (an innermost layer) was manufactured as Example 2, except using the LDPE not containing blue pigment instead of the master batch of black pigment.

### (Comparison example 2-2)

The laminated material of LDPE film (an outermost layer) / bleach paper / no color lacquer /mLLDPE film (an innermost layer) was manufactured as Example 2-4, except using the lacquer not containing blue pigment instead of the lacquer with blue pigment.

About the laminated material manufactured in Examples 1-4 and comparison example 2-1, 2-2, with a spectra UV meter, transmittancy was measured in range of 400-600nm wave length, light barrier thereof was evaluated.

Result thereof was shown in table 1.

**(Table 1)**

| Transmittancy | Example 2-1 | Example 2-2 | Example 2-3 | Example 2-4 | Comparison example 2-1 | Comparison example 2-2 |
|---|---|---|---|---|---|---|
| | Less than 5% | Less than 40% | Less than 10% | Less than 50% | More than 70% | More than 70% |

From table 1, a container made from the laminated material of Example 2-1, 2-2, 2-3, 2-4 and particularly the laminated material of Example 2-1 and 3 showed superior light barrier, compared with a container made from laminated material of comparison example2-1 2-2.

In addition, about the laminated material manufactured with Example 2-1, 2-2, 2-3, 2-4 and with comparison examples 2-1, 2-2, the inner layer of the bleach paper of the laminated material was inspected on the pin-hole during process steps of a brick type liquid food container containing 200ml.

In the laminated material of the Examples 1-4, with easy and prompt judgment, bleach paper due to pin holes were found by visual observation.

By the following conventional test method needed complexly, times the check were judged in the laminated material of comparison examples 1,2.

### (Conventional test method)

A container is divided to halt of the top and bottom with a craft knife, after taking out the content from the container.

Pouring red ink into a washed and dried container, the pin-hole was inspected after air drying about 24 hours.

The air-drying was used to avoid stress of the container in the dry process.

### Advantage

As shown in the Examples, the following effect shows by this invention.

Packaging materials of this invention can reflect the light in the wide range, 200-600nm. Therefore, degradation by light rays exposure of liquid food filled up by the container which made with this packaging materials is prevent.

The conventional packaging material needs the purge of back pigment of carbon black in the resin layer from apparatus of packaging materials manufacture. In packaging materials of this invention, colored resins can be easily change from one colored resin to the other, and the purge amount can be reduced.

In the cost and environment, by not using metal materials. e.g. Al foils, problem can be reduced.

While liquid food is filled up in a packaging materials container of this invention, a paper container can be judged any damage of internal layers of the packaging materials of a paper container promptly.

The judgment can be done in the manufacture of a paper container from packaging material and in filling of liquid food to the paper container without any problem the to environment and process condition.

### Industrial Applicability

Packaging material of this invention and the manufacturing method are used to pack milk, juice, refined sake, shochu, mineral water and liquid food of other drink.

## Claims

1. A method of manufacturing paper packaging materials for liquid food formed from a laminate having a paper layer, a thermoplastic resin outside layer and a thermoplastic resin inside layer **characterized by** comprising
a step of preparing substantially complete bleached white bleached paper layer of weight of 50-350g /m²,
a step of providing light barrier layer of light barrier material in the inside of the bleach paper layer before or during the lamination of the inside thermoplastic resin layer,
a step of inspecting defect of the obtained laminate by observation of the visible or invisible inside-surface of the bleach layer from the inside thermoplastic resin layer side of the obtained laminate through the light barrier layer.

2. A manufacturing method as defined in Claim 1, wherein thermoplastic resin layer of the inside of bleach paper layer contains blue pigment, yellow pigment and white pigment.

3. A manufacturing method as defined in Claim 2, wherein the thermoplastic resin layer containing the pigment consist of three kinds of thermoplastic resin layer containing deferent pigment from each other.

4. A manufacturing method as defined in Claim 2, wherein the thermoplastic resin layer containing the pigment consist of a thermoplastic resin layer containing one kind of the above pigments and thermoplastic resin layer containing the others of the pigments.

5. A manufacturing method as defined in Claim 2, wherein the thermoplastic resin layer of the outside of bleach paper layer further contains white pigment.

6. A manufacturing method as defined in Claim 1, wherein a dark color pigment containing layer is provided in the inside of the bleach paper layer, and transparency thermoplastic resin inner layer is provided in the inside of the dark color pigment component layer.

7. A manufacturing method as defined in Claim 6, wherein the dark color pigment-containing layer contacts with the bleach paper layer directly.

8. A paper packaging materials for liquid food formed from laminated material having a paper layer, and an outside thermoplastic resin layer and an inside thermoplastic resin layer **characterized by** that
the paper layer is substantially complete bleached white bleach paper layer with weight of 50-350g /m² and the thermoplastic resin layer of the inside of the paper layer contains blue pigment, yellow pigment and white pigment,

9. A paper packaging materials as defined in Claim 8, wherein the thermoplastic resin layer-containing pigment consist of three kinds of thermoplastic resin layers that contain deferent pigment each other.

10. A paper packaging materials as defined in Claim 8, wherein the thermoplastic resin layer containing pigment consist of a thermoplastic resin layer containing one kind of the pigment and s thermoplastic resin layer containing the others of the pigments.

11. A paper packaging materials as defined in Claim 8, wherein the thermoplastic resin layer of the outside of the bleach paper layer further contains white pigment.

12. A paper packaging materials for liquid food of this invention formed from laminated material having a paper layer, and an outside thermoplastic resin layer and an inside thermoplastic resin layer **characterized by**
the paper layer is substantially complete bleached white bleach paper layer with weight of 50-350g /m², a dark color pigment component layer is provided in the inside of the paper layer and a transparency thermoplastic resin inner layer is provided in the inside of the dark color pigment component layer.

13. A paper packaging materials as defined in Claim 12, wherein dark co!or pigment containing layer directly contacts with the bleach paper layer.
